Europäisches Patentamt

European Patent Office

Office européen des brevets

(11) Publication number: 0 359 723
A2

# (12) EUROPEAN PATENT APPLICATION

(21) Application number: 89830388.8

(22) Date of filing: 12.09.89

(51) Int. Cl.5: H 04 Q 3/00

(30) Priority: 12.09.88 BR 6802019

(43) Date of publication of application:
21.03.90 Bulletin 90/12

(84) Designated Contracting States:
AT BE CH DE ES FR GB GR IT LI LU NL SE

(71) Applicant: Diaz Horta, Silvio Mauro
Rua Aleixo Neto 48
Santa Lucia-Vitoria (Espiritu Santo State) (BR)

(72) Inventor: Diaz Horta, Silvio Mauro
Rua Aleixo Neto, 48
Vitoria - Espiritu Santo (BR)

Marques da Fonseca, Joaquim
Rua Sao Luiz, 360
Vitoria - Espiritu Santo (BR)

Boromeu Lopes, Carlos
Rua Carlos Brascolo, 2
Vitoria - Espiritu Santo (BR)

Miranda Resegue Lopes, Sandra
Rua Carlos Brascolo, 2
Vitoria - Espiritu Santo (BR)

(74) Representative: Righetti, Giuseppe
Bugnion S.p.A. Via Carlo Farini, 81
I-20159 Milano (IT)

(54) Arrangement in equipment for the reproduction of voice message in telephone line.

(57) The arrangement in equipment deals with the reproduction of voice messages in telephone line, with the aim of replacing the signal machines (generating tones and rings) used at present at public or private telephone exchanges, and presents an Input Manager Module (10) and an Output Manager Module (11), a Background Music Circuit (12), Mass Memories (13, 14, 15), a RAM's Memories Bank (16), a Delta Demodulation Circuit (17, 18), a Parallel/series Converter (19, 20), a Commutator switch (21), a Modulator (22), a Supervision Tone (N) (23) and a Summing Circuit (24).

FIG 1

Bundesdruckerei Berlin

# Description

## Arrangement in Equipment for the Reproduction of Voice Message in Telephone Line

The present invention refers to a new arrangement in a tone, ring and message signalling equipment (TRMS) for the reproduction of voice messages (educational, promotional messages, etc.) with superposition of background music, supervision tone, calling ring and others, with the purpose of replacing equipments generating tones and rings (signal machine) used at present at public or private telephone exchanges, offering practical and functional technical advantages.

The TRMS has the capacity to reproduce different messages of any length of time, during 24 hours uninterupptedly, with or without repetitions of a given message, or several different messages simultaneously.

Occupying the spaces (times) during telephone calls, in which the supervision tones (busy, line, calling, inaccessible tone, etc.) and the ring tones (current of calling ring) are at present sent to subscribers, and replacing them by voice messages superimposed to the tones and by music that reaches the subscriber through the telephone line.

In order to better illustrate this report, we refer to the annexed drawing in which:

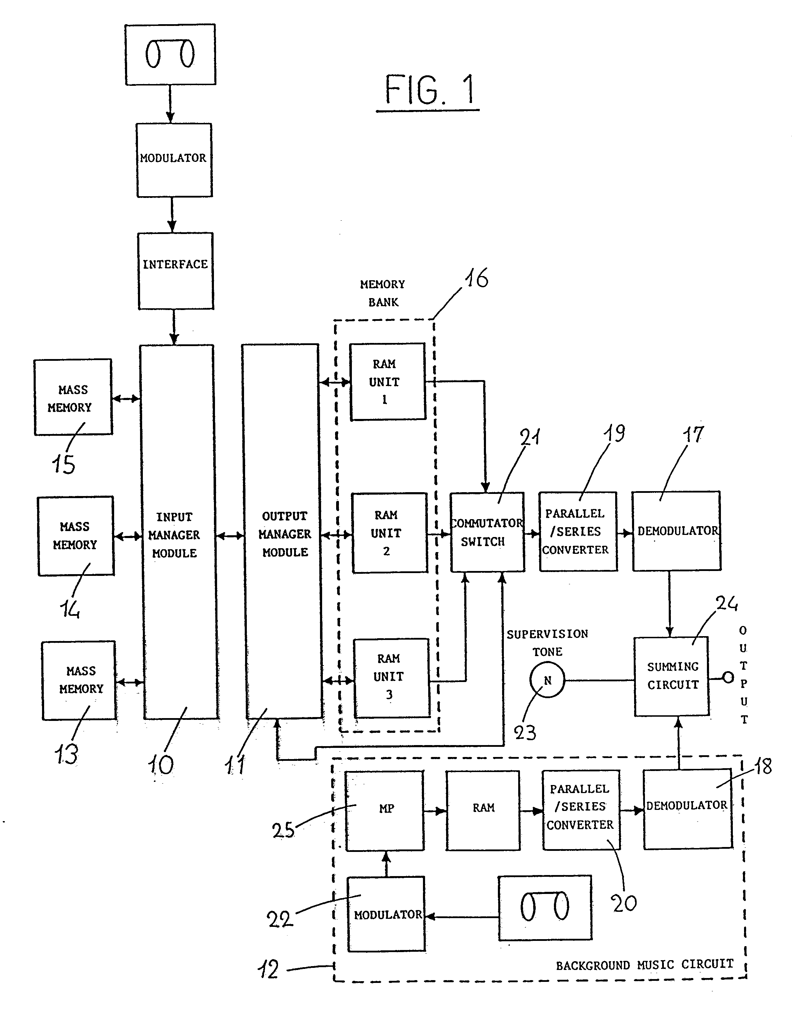

- Figure 1 is a schematic drawing of the blocks diagram of the equipment.

As may be inferred from the drawing, the tone, ring and message signaller (TRMS) is made up of two modules: the Input Manager 10 and the Output Manager 11, in addition to an independent circuit for the reproduction of background music, which we shall describe below.

The Input Manager Module 10 has as its main function, the transfer of the information recorded in the magnetic tape (0-0) to the Mass Memories (WINCHESTER) (13, 14, 15). The monitoring of this module is carried out by means of a keyboard and alphanumeric display.

Once the messages have been recorded in the magnetic tape, the encoding of said information in pulse trains (binary signal) is carried out, through the reproduction of the tape, by the Delta Modulation Circuit 22. After carrying out the encoding in binary signals, those pieces of information are transferred to the Mass Memories 13, 14, 15 through an interface with the aim of controlling the information transfer rate between the modulator circuit 22 and the input manager module 10.

The size of the Mass Memories is directly related to the message length.

Another function of the Input Manager 10 is to carry out the control and transfer of the information contained in the Mass Memories 13, 14, 15 to a RAM's Memory Bank 16 through the Output Manager Module 11. As soon as the transfer has started, the Output Manager Module 11 makes the distribution of that information in the RAM's Memories Bank 16. When the three units that make up this bank have been charged, this module informs this condition to the Input Manager 10, causing the latter to interrupt the data transfer until a new request is made. At the same time, the Output Manager 11 starts transferring the information contained in the first unit of the RAM's Memories Bank 16 to the circuit of Delta Demodulation 17, 18, through the Commutator Switch 21 and the Parallel/series Converter 19, 20. After all the pieces of information of the first unit have been transferred, the same process is restarted automatically in the second and third Units of the Memories Bank 16. In the meanwhile, when one of the Units of the Memories Bank 16 has been "discharged", the Output Manager 11 requests from the Input Manager Module 10 a new data transfer from the Mass Memories to this Unit, causing a transfer interruption to occur whenever the Unit has been discharged. The recomposition of the pulse train (binary signals) of the Memories Bank 16 into analog signals is carried out by the Demodulator Circuit 17, 18. Thus, the whole reproduction of voice messages in telephone lines, in a continuous and uninterrupted way, is carried out through the memorization of those messages in Mass Memories 13, 14, 15 and subsequently, through the recomposition of those data, thus eliminating the permanent use of magnetic tape units. In addition, the TRMS equipment has an additional circuit called Background Music Circuit 12, with the purpose of introducing an uninterrupted musical signal together with the voice messages. Likewise, the size of the RAM Memory of this circuit is directly related to the length (duration) of the musical signal whose reproduction is intended.

The Background Music Circuit 12 has been projected so that in case of an eventual failure in the Input 10 or the Output Manager Module 11, a musical signal shall remain present in the telephone line.

The encoding and decoding process of the analog signal into digital-analog is the same as the one described above for the voice messages; however, the sampling frequency of the musical signal is higher than the sampling frequency used for the voice messages, in order to obtain a better reproduction quality of this signal. In addition, the Background Music Circuit 12 has a Microprocessor (MP) 25 which controls all the inherent functions of the circuit, which is independent of the Input 10 and Output 11 Manager Modules. Thus, in order that a subscriber may hear the voice message in addition to the musical signal, it is necessary to count on a Summing Circuit, for the mixing of these signals, in addition to the Supervision Tone (N) of the telephone exchange, so that the subscriber may have the control of his call.

## Claims

Arrangement in equipment for the reproduction of voice message in telephone line, with the purpose of replacing equipments generating tones and rings (signal machine) used at present at public or private telephone exchanges, characterized by the production of voice messages (educational, promotional messages, etc.) with superposition of background music, supervision tone, calling ring and others, envisaging an Input Manager Module (10) and an Output Manager Module (11), in addition to a Background Music Circuit (12), the Input Manager Module (10) having as its main function the transfer of the information recorded in the magnetic tape (0-0) to the Mass Memories (13, 14, 15), the set including a RAM's Memories Bank (16), a Delta Demodulation circuit (17, 18), a Parallel/series Converter (19, 20), a Commutator switch (21), a Modulator (22), a Supervision Tone (N) (23) and a Summing Circuit (24).

# FIG. 1